# EUROPEAN PATENT APPLICATION

(11) **EP 4 831 518 A1**
(43) Date of publication of application: **28.10.2026**
(21) Application number: 26165945.2
(22) Date of filing: 19.03.2026
(51) Int. Cl.: F16K 11/04, F16K 1/44, F16K 27/02, F16K 31/06, H01M 8/04089, H01M 8/04119, H01M 8/04223

(54) **INTEGRATED PURGE AND DRAIN VALVE FOR HYDROGEN APPLICATIONS**

(30) Priority: 24.04.2025 IN 202541039417
(71) Applicant: Cummins Inc., Columbus, IN 47201 (US)
(72) Inventor: PATIL, Sandip, 411048 Pune (IN)
(74) Representative: Cleveland Scott York

(57) **Abstract**

An integrated purge and drain valve (100) for hydrogen applications is disclosed. The valve includes a valve body (104) that houses an elongated plunger (114). An actuator (102) mounted to the valve body actuates the plunger between open and closed positions. The plunger is configured to simultaneously open and close a purge fluid flow path (116) through the valve body and a water flow path (118) through the valve body that is separate from the purge fluid flow path.

## Description

### Field of the Disclosure

The present disclosure relates generally to applications which employ hydrogen as a fuel, and more particularly to an integrated purge and drain valve for hydrogen applications.

### BACKGROUND

Fuel cells can use hydrogen gas or other fuel in a gas mixture as a fuel source to produce electrical power. For example, hydrogen fuel cells use a hydrogen gas mixture and oxygen from air to form water and electricity via electrolysis in a fuel cell membrane. The electricity is then used as a main power source to rotate an output shaft in order to, for example, propel a vehicle. The electrolysis process produces fluid residuals, such as water and purge fluids, which must be removed from the fuel cell.

In hydrogen fuel cell systems, a water drain valve removes water produced as a byproduct of the hydrogen oxygen reaction within the fuel cell, preventing water accumulation and maintaining fuel cell performance. A purge valve is also employed to remove purge fluids such as excess condensate and inert gases that accumulate within the fuel cell system to prevent the buildup of non-reactive components. However, the use of two different valves to control the flow of water and purge fluids increases parasitic losses for having to operate two different valves and increases system costs by having two different valves integrated into the system hardware. Therefore, there remains a need for further improvements in hydrogen applications such as fuel cell systems.

### DISCLOSURE OF ILLUSTRATIVE EMBODIMENTS

For the purposes of clearly, concisely and exactly describing illustrative embodiments of the present disclosure, the manner, and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created and that the invention includes and protects such alterations, modifications, and further applications of the exemplary embodiments as would occur to one skilled in the art.

### SUMMARY

The present disclosure includes an integrated purge and drain valve for hydrogen applications. The valve includes a valve body that houses an elongated plunger. An actuator mounted to the valve body actuates the plunger between open and closed positions. The plunger is configured to simultaneously open and close a purge fluid flow path through the valve body and a water flow path through the valve body. The water flow path is separate from the purge fluid flow path.

This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

The description herein makes reference to the accompanying drawings wherein like numerals refer to like parts throughout the several views, and wherein:
FIG. 1 is a simplified schematic diagram of an example application for hydrogen fuel that includes an integrated purge and drain valve according to the present disclosure.
FIG. 2 is a longitudinal cross-sectional view of an example embodiment of an integrated purge and drain valve according to the present disclosure.
FIG. 3 is a simplified schematic diagram showing a part of the integrated purge and drain valve of FIG. 2 in an open position.

### DETAILED DESCRIPTION OF ILLUSTRATIVE EMBODIMENTS

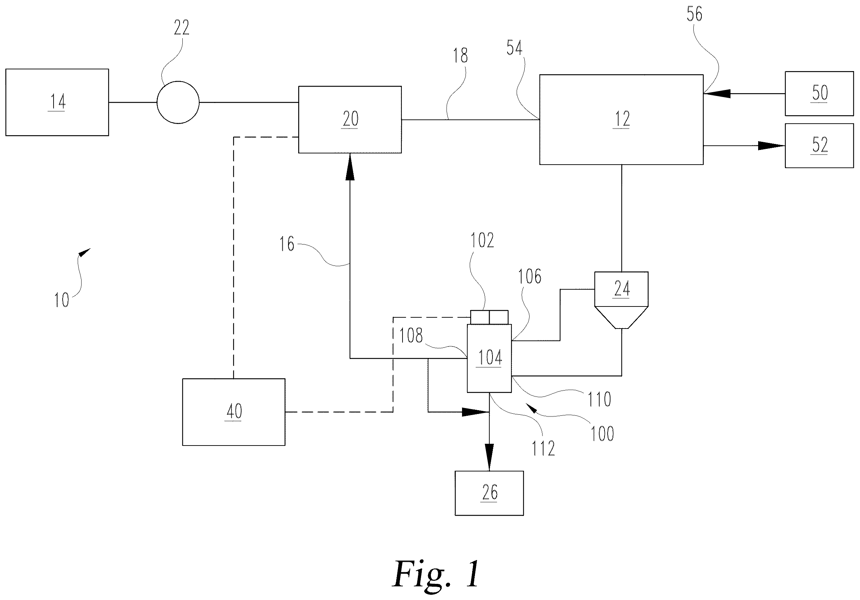

With reference to FIG. 1, there is illustrated a simplified fuel cell system 10 including a fuel ejector 20 and a fuel cell 12. Fuel cell 12 generates power by using hydrogen gas from fuel source 14 and oxygen from air 50 for electrolysis in one or more membranes to generate electricity. Fuel cell system 10 includes a pressure regulator 22 connected between fuel ejector 20 and fuel source 14. Fuel ejector 20 entrains the two incoming gaseous flows and so that the fuel mixture is output to fuel cell supply 18. Fuel ejector 20 provides a fuel mixture of the hydrogen gas from fuel source 14 and any fluid residuals that are returned from fuel cell 12, and the fuel mixture is provided to fuel cell 12 by fuel cell supply 18.

Fuel cell 12 includes an anode side 54 that receives the fuel mixture from fuel cell supply 18 and a cathode side 56 that receives the air. Cathode side 56 includes an outlet 52 for air and water vapor remaining after electrolysis. The anode side 54 of fuel cell 12 produces fluid residuals including water and purge fluids such as hydrogen, nitrogen, water vapor.

The fluid residuals from fuel cell 12 are recycled to ejector 20 and/or output to the exhaust from the anode side 54 in a fuel cell return 16. Fuel cell return 16 is connected between fuel cell 12 and fuel ejector 20. A water trap 24 may be provided in fuel cell return 16 to separate the water from the fluid residuals produced by fuel cell 12. The water can be drained to an exhaust 26. The other purge fluids from the fluid residuals can be purged to exhaust 26 and/or returned to ejector 20.

An integrated purge and drain valve 100 is provided in fuel cell return 16 to control the flow of the separated purge fluids and water. Valve 100 can be connected to an electronic controller 40 that is operable to control opening and closing of valve 100 using an electronic actuator 102 of valve 100. The use of a single integrated purge and drain valve 100 eliminates providing separate water drain and purge valves.

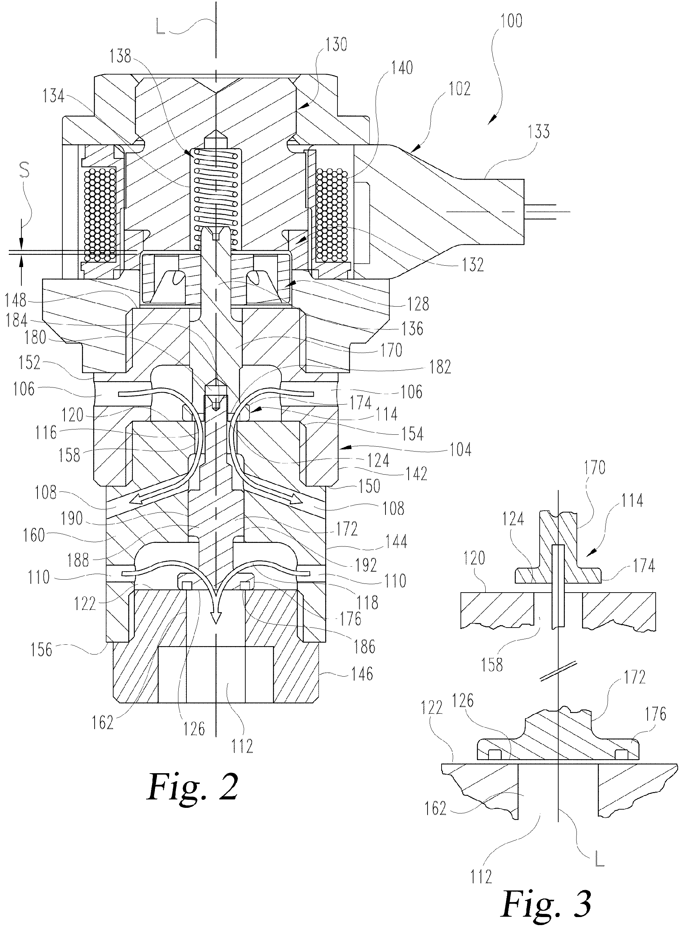

Referring further to FIG. 2, valve 100 includes a valve body 104 extending along a longitudinal axis L. Actuator 102 is mounted to valve body 104 to control separate flows of purge fluid and drained water through valve body 104. Valve body 104 includes at least one purge fluid inlet 106, at least one purge fluid outlet 108, at least one water inlet 110, and at least one water outlet 112. A plunger 114 located within valve body 102 is movable with actuator 102 between a closed position and an open position. In the closed position, a purge fluid flow path 116 from purge fluid inlet 106 to purge fluid outlet 108 and a water flow path 118 from water inlet 110 to water outlet 112 are simultaneously closed by plunger 114. In the open position of plunger 114, the purge fluid flow path 116 and the water flow path 118 are simultaneously open.

Valve body 104 includes a first seat surface 120 in purge fluid flow path 116 between the at least one purge fluid inlet 106 and the at least one purge fluid outlet 108. Purge fluid flow path 116 extends through first seat surface 120 to connect the at least one purge fluid inlet 106 and the at least one purge fluid outlet 108. Valve body 104 includes a second seat surface 122 in water flow path 118 between the at least one water inlet 110 and the at least one water outlet 112. Water flow path 118 extends through the second seat surface 122 to connect the at least one water inlet 110 and the at least one water outlet 112.

Plunger 114 is housed in valve body 104 and is elongated along longitudinal axis L. Plunger 114 including a first plunger face 124 and a second plunger face 126 axially spaced from first plunger face 124. Plunger 114 is axially movable between a closed position and an open position. In the closed position such as shown in FIG. 2, first plunger face 124 engages first seat surface 120 to close purge fluid flow path 116 and second plunger face 126 engages second seat surface 122 to close water flow path 118. In the open position such as shown in FIG. 3, first plunger face 124 is axially spaced from first seat surface 120 to open purge fluid flow path 116 and second plunger face 126 is axially spaced from second seat surface 122 to open water flow path 118.

Actuator 102 is mounted on valve body 104 and operably coupled to plunger 114 to axially move plunger 114 between the closed position and the open position. In an embodiment, actuator includes an armature 128 engaged to plunger 114 and a pole 130 engaged to valve body 102. Armature 128 is spaced a distance S from pole 130 in the closed position of plunger 114. In an embodiment, the spacing provided by distance S corresponds to a gap that establishes a stroke length for plunger 114 for opening and closing each of the valve seat surfaces 120, 122. Actuator 102 also includes an electric coil 132 that is operable to magnetize pole 130 to displace armature 128 toward pole 130 to actuate plunger 114. Coil 132 is coupled to a connector 133 that provides electrical energy from an energy source for actuation of actuator 102.

Pole 130 includes a receptacle 134 extending axially therein that opens in a downstream or distal direction. Plunger 114 includes a stem 136 that extends through armature 128 into receptacle 134. A spring 138 located in receptacle 134 extends between pole 130 and armature 128. Spring 138 biases plunger 114 to the closed position.

In an embodiment, a flux blocker 140 extends around and spans the gap between pole 130 and armature 128. In an embodiment, flux blocker 140 is made of non-magnetic material or materials so that more magnetic flux lines pass through plunger 114, allowing plunger 114 to experience a greater electromagnetic force.

In an embodiment, valve body 104 is comprised of a housing 142, a first valve seat 144, and a second valve seat 146 that are assembled to one another, such as by threaded connections, press-fits, welds, and/or fused connections. In an embodiment, housing 142, first valve seat 144, and/or second valve seat 146 may be integral with one another as a single monolithic pieces. For example, two or more of housing 142, first valve seat 144, and second valve seat 146 can be formed by three-dimensional printing and/or machining.

Housing 142 extends from a first upstream or proximal housing end 148 to a second downstream or distal housing end 150. Actuator 102 includes a mounting body 103 mounted to first housing end 148. Mounting body 103 houses pole 130 and electric coil 132.

Housing 142 includes the at least one purge fluid inlet 106 and a part of the purge fluid flow path 116. In an embodiment, housing 142 includes a plurality of purge fluid inlets 106 spaced circumferentially about housing 142. The purge fluid inlets 106 extend transversely to longitudinal axis L and through a sidewall 152 of housing 142 to allow purge fluids from the fluid residuals to enter purge fluid flow path 116. In an embodiment, purge fluid inlets 106 are orthogonally oriented to longitudinal axis L. Other orientations are also contemplated.

First valve seat 144 is engaged at the second housing end 150 of housing 142. First valve seat 144 extends from an upstream end 154 to a downstream end 156 of first valve seat 144. Upstream end 154 includes first seat surface 120 and a first opening 158 in first seat surface 120. First valve seat 144 includes a second part of the purge fluid flow path 116 extending from first opening 158 in first seat surface 120 to the at least one purge fluid outlet 108. First valve seat 144 also includes the at least one water inlet 110 and a first part of water flow path 118 at downstream end 156.

In an embodiment, the at least one purge fluid outlet 108 is oriented transversely to longitudinal axis L and allows fluid to flow from purge fluid flow path 116 out of valve body 102 through the at least one purge fluid outlet 108. In an embodiment, the at least one purge fluid outlet 108 is angled relative to longitudinal axis L in a downstream or distal direction to accommodate placement of plunger 114 in valve body 102 and the assembly of first valve seat 144 with housing 142. In an embodiment, the at least one purge fluid outlet 108 includes two or more purge fluid outlets 108 extending through a sidewall 160 of first valve seat 144.

In an embodiment, water inlets 110 are oriented transversely to longitudinal axis L and allow water from the fluid residuals to flow into water flow path 118 within first valve seat 144. In an embodiment, the at least water inlet 110 includes two or more water inlets 110 extending through sidewall 160 of first valve seat 144. In an embodiment, water inlets 110 are orthogonally oriented to longitudinal axis L, but other orientations are also contemplated.

Second valve seat 146 is engaged at downstream end 156 of first valve seat 144. Second valve seat 146 includes second seat surface 122 and a second opening 162 in second seat surface 122. Second valve seat 146 also includes the at least one water outlet 112 and a second part of water flow path 118 extending from second opening 162 in second seat surface 122 to the at least one water outlet 112. Water outlet 112 is located through an axially facing end of second valve seat 146. In an embodiment, water outlet 112 is a single opening in fluid communication with water flow path 118 extending along longitudinal axis L.

The size of first and second openings 158, 162 can be configured to provide the desired flow rates through first and second valve seats 144, 146 when plunger 114 is in the open position. For example, gaseous purge fluid flows through first opening 158 in first seat surface 120 and drain water flows through second opening 162 in second seat surface 122. Second opening 162 is larger than first opening 158 to accommodate the flow of water, whereas first opening 158 can be smaller to accommodate the flow of gaseous purge fluid.

Plunger 114 includes a first plunger portion 170 engaged to actuator 102 and a second plunger portion 172 engaged to first plunger portion 170. First plunger portion 170 includes a first flange 174 forming first plunger face 124 that sealingly engages first seat surface 120 in the closed position of plunger 114. Second plunger portion 172 extends through first seat surface 170 to a second flange 176 forming second plunger face 126. Second plunger face 126 sealingly engages second seat surface 122 in the closed position of plunger 114 while first plunger face 124 simultaneously sealingly engages first seat surface 120.

First plunger portion 170 includes first stem 136 engaged to actuator 102. In an embodiment, first stem 136 is coupled to armature 128 and extends through armature 128 into receptacle 134 of pole 130. Spring 132 is positioned around first stem 136 and contacts a proximally oriented face of armature 128 and a distally oriented face of pole 130 in receptacle 134.

First plunger portion 170 further includes a bore 180 extending through first plunger face 124 that opens in the distal or downstream direction. A first seal 182 can be provided on first plunger face 174 around bore 180 to sealingly engage first seat surface 120. Second plunger portion includes 172 a second stem 184 extending into bore 180 and is engaged to first plunger portion 170 in bore 180. Second stem 184 can be engaged to second plunger portion 172 via a press fit, threaded connection, or other suitable connecting arrangement. Second plunger face 176 includes a second seal 186 that sealing engages second seat surface 122 in the closed position of plunger 114.

Valve body 104 includes a passage 190 connecting purge fluid flow path 116 and water flow path 118. In an embodiment, passage 190 extends along longitudinal axis L through first valve seat 144. Second plunger portion 172 includes a shaft portion 188 located in passage 190. In an embodiment, a circumferential seal 192 extends around shaft portion 188 in passage 190 and sealingly engages first valve seat 144 in passage 190 while allowing plunger 114 to move between the open and closed positions. Seal 192 fluidly isolates purge fluid flow path 116 from water flow path 118 so that the purge fluid and water do not mix in valve body 104.

In an embodiment, seal 192 is provided by an O-ring, sleeve, or other sealing member. In another embodiment, seal 192 is provided by a close fit between shaft portion 188 and valve seat 144 in passage 190.

In an embodiment, fuel cell system 10 includes fuel cell 12, fuel cell supply 18 for supplying a fuel mixture to fuel cell 12, and fuel cell return 16 receiving fluid residuals produced by electrolysis of the fuel mixture in fuel cell 12. Integrated purge and drain valve 100 is connected to fuel cell return 16 for controlling a flow of separate types of fluid residuals, including gaseous fluids and water, that are received by fuel cell return 16.

In an embodiment, fuel source 14 is connected to a first inlet of fuel ejector 20. Pressure regulator 22 is provided to control a pressure at which the hydrogen gas from fuel source 14 is provided to the first inlet of fuel ejector 20. The purge fluids from the fluid residuals from fuel cell return 16 can be provided from valve 100 to a second inlet of fuel ejector 20 and/or exhaust 26. Fuel ejector 20 includes an outlet that supplies the fuel mixture of the hydrogen fuel and residuals to fuel cell supply 18. Water from the fluid residuals can be separately by simultaneously from valve 100 provided to exhaust 26.

Electronic controller 40 (also referred to as ECU 40) can be configured to control various operational aspects of system 10, including the flow of purge fluids and water through separate flow paths through valve 100, among other operations. The electronic controller 40 can be implemented in a number of ways. Further, the electronic controller 40 can execute operating logic that defines various control, management, and/or regulation functions. The operating logic may be in the form of one or more microcontroller or microprocessor routines stored in a non-transitory memory, dedicated hardware, such as a hardwired state machine, analog calculating machine, various types of programming instructions, and/or other forms as would occur to those skilled in the art.

Electronic controller 40 may be provided as a single component, or a collection of operatively coupled components, and may comprise digital circuitry, analog circuitry, or a hybrid combination of both of these types. When of a multi-component form, electronic controller 40 may have one or more components remotely located relative to the others in a distributed arrangement. Electronic controller 40 can include multiple processing units arranged to operate independently, in a pipeline processing arrangement, in a parallel processing arrangement, or the like. In one embodiment, electronic controller 40 includes several programmable microprocessing units of a solid-state, integrated circuit type that are distributed throughout the system 10 and/or subsystem 30 that each includes one or more processing units and non-transitory memory.

For the depicted embodiment, electronic controller 40 includes a computer network interface to facilitate communications using standard Controller Area Network (CAN) communications or the like among various system control units. It should be appreciated that the depicted modules or other organizational units of electronic controller 40 refer to certain operating logic performing indicated operations that may each be implemented in a physically separate controller of electronic controller 40 and/or may be virtually implemented in the same controller. Electronic controller 40 may include one or more organizational units or circuits that may be implemented in hardware and/or as computer instructions on a non-transient computer readable storage medium and may be distributed across various hardware or computer based components.

Example and non-limiting organizational units of electronic controller 40 include, for example, sensors providing any value determined herein, sensors providing any value that is a precursor to a value determined herein, datalink and/or network hardware including communication chips, oscillating crystals, communication links, cables, twisted pair wiring, coaxial wiring, shielded wiring, transmitters, receivers, and/or transceivers, logic circuits, hard-wired logic circuits, reconfigurable logic circuits in a particular non-transient state configured according to the module specification, any actuator including at least an electrical, hydraulic, or pneumatic actuator, a solenoid, an op-amp, analog control elements (springs, filters, integrators, adders, dividers, gain elements), and/or digital control elements.

Electronic controller 40 and/or any of its constituent processors/controllers may include one or more signal conditioners, modulators, demodulators, Arithmetic Logic Units (ALUs), Central Processing Units (CPUs), limiters, oscillators, control clocks, amplifiers, signal conditioners, filters, format converters, communication ports, clamps, delay devices, memory devices, Analog to Digital (A/D) converters, Digital to Analog (D/A) converters, and/or different circuitry or functional components as would occur to those skilled in the art to perform the desired communications.

Various aspects of the present disclosure are contemplated. According to one aspect, an integrated purge and drain valve for hydrogen applications is provided. The valve includes a valve body, an elongated plunger houses in the valve body, and an actuator mounted on the valve body. The valve body includes a first seat surface, at least one purge fluid inlet, at least one purge fluid outlet, and a purge fluid flow path through the first seat surface that connects the at least one purge fluid inlet and the at least one purge fluid outlet. The valve body also includes a second seat surface, at least one water inlet, at least one water outlet, a water flow path through the second seat surface connecting the at least one water inlet and the at least one water outlet. The plunger includes a first plunger face and a second plunger face axially spaced from the first plunger face. The plunger is axially movable between a closed position in which the first plunger face engages the first seat surface to close the purge fluid flow path and the second plunger face engages the second seat surface to close the water flow path and an open position in which the first plunger face is axially spaced from the first seat surface to open the purge fluid flow path and the second plunger face is axially spaced from the second seat surface to open the water flow path. The actuator is operably coupled to the plunger to axially move the plunger between the closed position and the open position.

In an embodiment, the actuator includes an armature engaged to the plunger and a pole engaged to the valve body. The armature is spaced from the pole in the closed position of the plunger. The actuator also includes an electric coil that is operable to magnetize the pole to displace the armature toward the pole to actuate the plunger.

In an embodiment, the valve includes a flux blocker extending around and spanning a gap between the pole and the armature.

In an embodiment, the pole includes a receptacle. The plunger includes a stem that extends through the armature into the receptacle.

In an embodiment, the valve includes a spring in the receptacle that extends between the pole and the armature. The spring biases the plunger to the closed position.

In an embodiment, the valve body includes a housing extending from a first housing end to a second housing end. The housing includes the at least one purge fluid inlet and a part of the purge fluid flow path.

In an embodiment, the valve body includes a first valve seat engaged at the second housing end of the housing. The first valve seat extends from an upstream end to a downstream end. The upstream end includes the first seat surface and a first opening in the first seat surface. The first valve seat includes a second part of the purge fluid flow path extending from the first opening in the first seat surface to the at least one purge fluid outlet. The first valve seat also includes the at least one water inlet and a first part of the water flow path.

In an embodiment, the valve body includes a second valve seat engaged at the downstream end of the first valve seat. The second valve seat includes the second seat surface and a second opening in the second seat surface. The second valve seat includes the at least one water outlet and a second part of the water flow path extending from the second opening in the second seat surface to the at least one water outlet.

In an embodiment, the at least one water inlet extends through a sidewall of the second valve seat.

In an embodiment, the second opening is larger than the first opening.

In an embodiment, the at least one purge fluid outlet and the at least one water inlet extend through a sidewall of the first valve seat.

In an embodiment, the at least one purge fluid inlet extends through a sidewall of the housing.

In an embodiment, the plunger includes a first seal on the first face to sealingly engage the first seat surface in the closed position of the plunger. The plunger also includes a second seal on the second plunger face to sealingly engage the second seat surface in the closed position of the plunger.

In an embodiment, the plunger includes a first plunger portion engaged to the actuator and a second plunger portion engaged to the first plunger portion. The first plunger portion includes the first face and the second plunger portion extends from the first plunger portion through the first seat surface to the second plunger face.

In an embodiment, the first plunger portion includes a first stem engaged to the actuator and a bore extending through the first plunger face. The second plunger portion includes a second stem engaged to the first plunger portion in the bore.

In an embodiment, the valve includes seal around the second portion of the plunger. The seal is located between the at least one purge fluid outlet and the at least one water inlet.

In an embodiment, the valve body includes a passage connecting the purge fluid flow path and the water flow path. The plunger extends through the passage.

In an embodiment, the valve includes a seal in the passage around the plunger. The seal fluidly isolates the purge fluid flow path from the water flow path.

In an embodiment, the at least one purge inlet, the at least one purge outlet, and the at least one water inlet extend transversely through the valve body. The at least one water outlet extends axially through the valve body.

According to another aspect of the present disclosure, a fuel cell system is provided. The fuel cell system includes a fuel cell, a fuel cell supply for supplying a fuel mixture to the fuel cell, and fuel cell return receiving fluid residuals produced by electrolysis of the fuel mixture in the fuel cell. The fuel cell system also includes an integrated purge and drain valve connected to the fuel cell return for controlling a flow of separate types of fluid residuals, including gaseous fluids and water, in the fuel cell return. The integrated purge and drain valve configured according to any of the embodiments disclosed herein.

While illustrative embodiments of the disclosure have been illustrated and described in detail in the drawings and foregoing description, the same is to be considered as illustrative and not restrictive in character, it being understood that only certain exemplary embodiments have been shown and described and that all changes and modifications that come within the spirit of the claimed inventions are desired to be protected. It should be understood that while the use of words such as preferable, preferably, preferred or more preferred utilized in the description above indicates that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. An integrated purge and drain valve for hydrogen applications, the valve comprising:
a valve body including:
a first seat surface;
at least one purge fluid inlet, at least one purge fluid outlet, and a purge fluid flow path through the first seat surface that connects the at least one purge fluid inlet and the at least one purge fluid outlet;
a second seat surface;
at least one water inlet, at least one water outlet, a water flow path through the second seat surface connecting the at least one water inlet and the at least one water outlet;
an elongated plunger housed in the valve body, the plunger including a first plunger face and a second plunger face axially spaced from the first plunger face, wherein the plunger is axially movable between a closed position in which the first plunger face engages the first seat surface to close the purge fluid flow path and the second plunger face engages the second seat surface to close the water flow path and an open position in which the first plunger face is axially spaced from the first seat surface to open the purge fluid flow path and the second plunger face is axially spaced from the second seat surface to open the water flow path; and
an actuator mounted on the valve body and operably coupled to the plunger to axially move the plunger between the closed position and the open position.

2. The valve according to claim 1, wherein
(a) the actuator includes:
an armature engaged to the plunger;
a pole engaged to the valve body, the armature spaced from the pole in the closed position of the plunger; and
an electric coil that is operable to magnetize the pole to displace the armature toward the pole to actuate the plunger, or
(b) the valve body includes a passage connecting the purge fluid flow path and the water flow path, the plunger extending through the passage, or
(c) the at least one purge inlet, the at least one purge outlet, and the at least one water inlet extend transversely through the valve body; and
the at least one water outlet extends axially through the valve body.

3. The valve according to claim 2,
(a) comprising a flux blocker extending around and spanning a gap between the pole and the armature, or
(b) wherein:
the pole includes a receptacle; and
the plunger includes a stem that extends through the armature into the receptacle.

4. The valve according to claim 3, comprising a spring in the receptacle that extends between the pole and the armature, the spring biasing the plunger to the closed position.

5. The valve according to any previous claim, wherein the valve body includes:
a housing extending from a first housing end to a second housing end, the housing including the at least one purge fluid inlet and a part of the purge fluid flow path.

6. The valve according to claim 5, wherein the valve body includes:
a first valve seat engaged at the second housing end of the housing, the first valve seat extending from an upstream end to a downstream end, the upstream end including the first seat surface and a first opening in the first seat surface, the first valve seat including a second part of the purge fluid flow path extending from the first opening in the first seat surface to the at least one purge fluid outlet, the first valve seat also including the at least one water inlet and a first part of the water flow path.

7. The valve according to claim 6, wherein the valve body includes:
a second valve seat engaged at the downstream end of the first valve seat, the second valve seat including the second seat surface and a second opening in the second seat surface, the second valve seat including the at least one water outlet and a second part of the water flow path extending from the second opening in the second seat surface to the at least one water outlet.

8. The valve according to claim 7, wherein
(a) the at least one water inlet extends through a sidewall of the second valve seat, or
(b) the second opening is larger than the first opening.

9. The valve according to any of claims 6 through 8, wherein the at least one purge fluid outlet and the at least one water inlet extend through a sidewall of the first valve seat.

10. The valve according to any of claims 5 through 9, wherein the at least one purge fluid inlet extends through a sidewall of the housing.

11. The valve according to claim 1, wherein the plunger includes:
(a) a first seal on the first plunger face to sealingly engage the first seat surface in the closed position of the plunger; and
a second seal on the second plunger face to sealingly engage the second seat surface in the closed position of the plunger, or
(b) a first plunger portion engaged to the actuator, the first plunger portion including the first plunger face; and
a second plunger portion engaged to the first plunger portion, the second plunger portion extending from the first plunger portion through the first seat surface to the second plunger face.

12. The valve according to claim 11, wherein:
the first plunger portion includes a first stem engaged to the actuator and a bore extending through the first plunger face; and
the second plunger portion includes a second stem engaged to the first plunger portion in the bore.

13. The valve according to claim 12, comprising a seal around the second plunger portion, the seal located between the at least one purge fluid outlet and the at least one water inlet.

14. The valve according to claim 13, comprising a seal in the passage around the plunger, the seal fluidly isolating the purge fluid flow path from the water flow path.

15. A fuel cell system, the fuel cell system comprising:
a fuel cell;
a fuel cell supply for supplying a fuel mixture to the fuel cell;
a fuel cell return receiving fluid residuals produced by electrolysis of the fuel mixture in the fuel cell; and
an integrated purge and drain valve connected to the fuel cell return for controlling a flow of separate types of fluid residuals, including gaseous fluids and water, in the fuel cell return, the integrated purge and drain valve configured according to any of claims 1-19.
